# EUROPEAN PATENT APPLICATION

(11) **EP 1 475 901 A1**
(43) Date of publication of application: **10.11.2004**
(21) Application number: 02788842.9
(22) Date of filing: 16.12.2002
(51) Int. Cl.: H04B 3/54

(54) **POWER LINE CARRIER COMMUNICATION MODEM**

(30) Priority: 13.02.2002 JP 2002035721
(71) Applicant: SUMITOMO ELECTRIC INDUSTRIES, Ltd, Osaka-shi, Osaka 541-0041 (JP)
(72) Inventor: MAEHATA, Takashi, c/o Sumitomo Electric Ind. Ltd., 1-3, Shimaya 1-chome, Konohana-ku (JP)
(74) Representative: Cross, Rupert Edward Blount
(86) International application number: PCT/JP2002/013150
(87) International publication number: WO 2003/069796

(57) **Abstract**

A modem for a power line carrier system performing communication through a power distribution line network. A modem for time division multiplex communication adjusts in a time slot allocated for the communication the input-output impedance to a matched low-impedance value and adjusts in the other time slots not allocated to the modem the input-output impedance to a high-impedance value. Another modem for both time division multiplex communication and frequency division multiplex communication adjusts in a time slot allocated for the communication the input-output frequency to enable an allocated frequency to pass through the modem. These measures can secure good communication without adversely affecting the communication through the other modems connected to the power distribution line network, without regard to the number of terminals connected.

## Description

### Technical Field

The present invention relates to a modem for use in communication through a power line carrier system, which utilizes for communication a power line network such as a power distribution line network.

### Background Art

It is known that a power line carrier system transmits data through power lines. A power line carrier system comprises a power distribution line network, called a subnet, connected to a pole transformer and a plurality of terminals connected to the network. Each terminal is provided at each house.

It is desirable that a terminal modem that connects the terminal to the power distribution line has an input-output impedance matched with the characteristic impedance of the power distribution line. However, ordinary power distribution line networks are usually designed without considering the use for data transmission. As a result, individual power distribution lines usually have a different characteristic impedance.

When a terminal modem is connected to such a power distribution line, its impedance may mismatch with that of the power distribution line, creating reflection of the signal. Furthermore, when a plurality of terminal modems are connected to a power distribution line, the transmission characteristic of the power distribution line changes. This change deteriorates the communication quality of a normally communicable terminal modem or disables it from communicating.

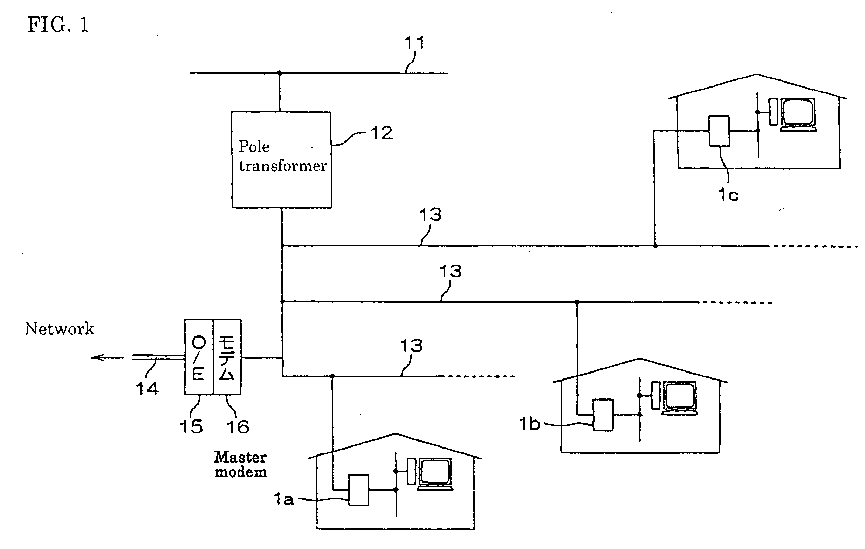

Figure 1 is a diagram showing a power line carrier system. A plurality of terminal modems, 1a, 1b, and 1c, are connected to power distribution lines 13. A master station usually connected to a higher-level network, such as the Internet, is connected to the power line carrier system through an optical fiber 14. While the master station and the terminal modem 1a are communicating with each other, when the terminal modem 1b is connected to the system, the transmission characteristic of the power distribution lines 13 changes.

This change deteriorates the quality of communication between the master station and the terminal modem 1a. In the worst case, the communication between them cannot be continued.

Moreover, when the terminal modem 1c is connected to the system in addition to the terminal modems 1a and 1b, the transmission characteristic of the power distribution lines 13 changes further in a complicated manner.

This change deteriorates the quality of communication between the master station and each of the terminal modems 1a and 1b.

A radical solution to the problem requires the standardization of the characteristic impedance of the power distribution lines. However, this requirement is unrealistic for the existing power distribution lines in terms of cost and other standpoints.

### Disclosure of the Invention

In view of the foregoing circumstances, an object of the present invention is to offer a modem for a power line carrier system which modem can maintain good communication without regard to the number of terminals connected.

To attain the foregoing object, a modem for a power line carrier system in accordance with an aspect of the present invention is provided with impedance-adjusting means that can change the input-output impedance with respect to time. The impedance-adjusting means can in a time slot allocated for the communication adjust the input-output impedance to a value that can attain a "condition under which the communication is performed in good quality." The present invention is based on the premise that the power line carrier system can perform time division multiplex communication.

According to the foregoing structure, because the input-output impedance can be changed with respect to time, the input-output impedance can in a time slot allocated for the communication be adjusted to a value that attains the best communication quality. The "condition under which the communication is performed in good quality" means, for example, a condition under which the input signal being monitored becomes the highest level or a condition under which the error rate of the sign of the input signal being monitored becomes the lowest value. As a result, the modem for a power line carrier system can maintain the communication under the best condition.

The impedance-adjusting means may in the other time slots not allocated to the modem adjust the input-output impedance to a value higher than the value that can attain a condition under which the communication is performed in good quality. The adjustment to the "higher value" can prevent adverse effects on the communication through the other modems connected to the power line network. The adjustment can be performed, for example, by opening the input-output terminal with a switch or by terminating the input-output terminal with a resistor having high resistance.

To attain the above-described object, another modem for a power line carrier system in accordance with another aspect of the present invention is provided with frequency-adjusting means that can change the input-output frequency with respect to time. The frequency-adjusting means can in a time slot allocated for the communication adjust the input-output frequency to enable an allocated frequency to pass through the means. The present invention is based on the premise that the power line carrier system can perform both time division multiplex communication and frequency division multiplex communication.

More specifically, the frequency-adjusting means may have a plurality of filters to select a filter that passes an allocated frequency in an allocated time slot.

### Brief Description of the Drawing

Figure 1 is a diagram showing a power line carrier system.
Figure 2 is a diagram explaining the change in the input-output impedance of individual terminal modems with respect to time.
Figure 3 is a diagram showing the function of a frequency-adjusting circuit.
Figure 4 is a diagram showing the frequency-passing performance of band pass filters.
Figure 5 is an illustration demonstrating the switch control for the terminal modems.

### Best Mode for Carrying Out the Invention

An embodiment of the present invention is explained in detail below by referring to relevant accompanying drawings.

Figure 1 is a diagram showing a power line carrier system. A plurality of terminal modems, 1a, 1b, 1c, and so on, are connected to power distribution lines 13 on the secondary side of a pole transformer 12. A power distribution line 11 on the primary side of the pole transformer 12 is usually structured with a three-phase system, and the power distribution lines 13 on the secondary side of the pole transformer 12 are usually structured with a single-phase three-wire system. For simplicity, these power distribution lines are expressed by a single line in Fig. 1.

A master station usually connected to a higher-level network, such as the Internet, is connected to the power distribution lines 13 through an optical fiber 14, an optical/electrical (O/E) converter 15, and a master modem 16. When a communications circuit is formed by connecting the master modem 16 between one of the two live lines and the neutral line of a power distribution line 13 structured with a single-phase three-wire system, the terminal modems 1a, 1b, 1c, and so on are connected between the live line and the neutral line. When the master modem 16 is connected between the two live lines of the single-phase three-wire system, the terminal modems 1a, 1b, 1c, and so on are connected between the live lines.

In the power line carrier system, the communication channel between the master station and each of the terminal modems 1a, 1b, 1c, and so on is frequency-divided into a main channel for data transmission and a subchannel for system control. To structure a time division multiplex system, the main channel can be divided into a plurality of slots according to the number of terminal modems to be communicated. For example, when the number of terminal modems is *N*, the number of slots is *N*.

The terminal modems 1a, 1b, 1c, and so on are provided with an impedance-adjusting circuit. The impedance-adjusting circuit can change the input-output impedance of a modem. More specifically, it can change the impedance from a value close to infinity (hereinafter referred to as a "high impedance") to lower values in a stepwise manner.

The impedance can be changed, for example, by switching the resistance values of the resistors connected in parallel to the input-output terminals of the terminal modems 1a, 1b, 1c, and so on. A variable resistor capable of varying the resistance with high speed may be used to change the resistance steplessly.

Under the following assumption, while the master station and the terminal modem 1a are communicating with each other, the terminal modem 1b is intended to connect to the system.

When the terminal modem 1b is switched on by the operator, the input-output impedance of the modem is adjusted to the high impedance by the impedance-adjusting circuit (this state is referred to as the initial state).

Using the subchannel for system control, the terminal modem 1b sends the master station a communication-requesting signal and waits for a response.

Subsequently, when a time-divided communication slot is allocated by the master station, the terminal modem 1b adjusts its input-output impedance to a "certain value" lower than the high impedance at the initial state only for the time period of the allocated slot. The modem adjusts the input-output impedance to the high impedance for the time period outside the allocated slot. The foregoing "certain value" of the input-output impedance can be determined by finding a value at which the communication can be performed under the best condition. The best condition can be found, for example, by changing the input-output impedance of the terminal modem 1b so as to attain the condition under which the input signal becomes the highest level. The "certain value" may be fixed. Hereinafter, this matched impedance is referred to as a "low impedance."

When the master station allocates a communication slot to the terminal modem 1b, it is necessary to change the temporal relative position and width of the communication slot used for the communication with the terminal modem 1a. In this case, the master station sends a notice of change in the allocated communication slot to the terminal modem 1a.

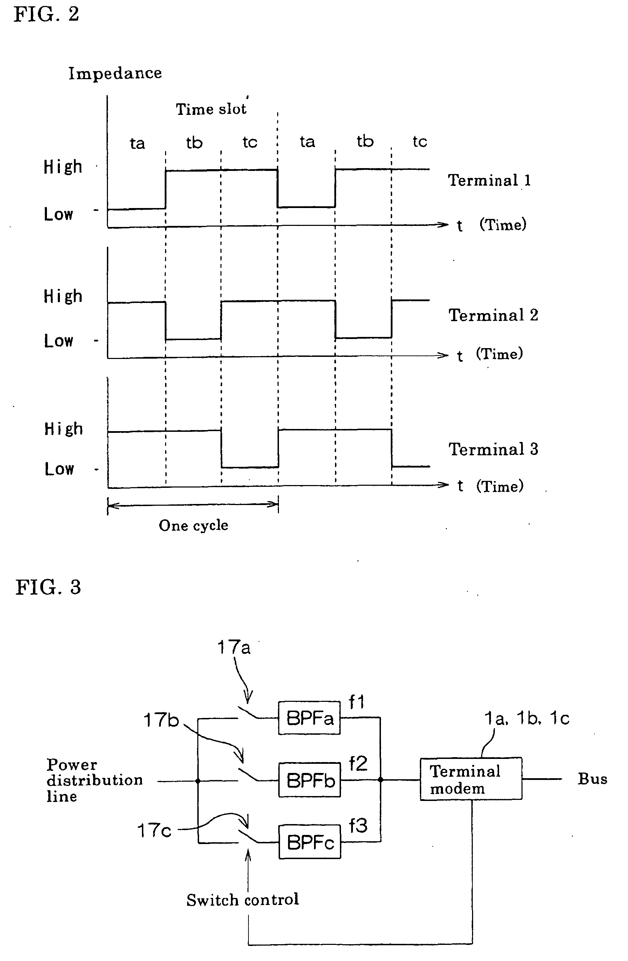

Figure 2 is a diagram explaining the change in the input-output impedance of individual terminal modems with respect to time. In this case, the terminal modems 1a, 1b, and 1c are communicating. Time slots *ta*, *tb*, and *tc* are allocated to the terminal modems 1a, 1b, and 1c, respectively. Here the above-described communication slot is expressed as a time slot. The terminal modem 1a adjusts its input-output impedance to the low impedance only for the time period allocated to the time slot *ta*, with the impedance adjusted to the high impedance for the rest of the time. The input-output impedance values of the terminal modems 1b and 1c are similarly adjusted.

Because each terminal modem adjusts its impedance to the low impedance only for the allocated time period, other terminal modems can communicate with the master station without interference.

Another embodiment of the present invention is explained below.

In the prior embodiment, the communication between the master station and each terminal modem is performed by the time division multiplex system, in which communication time is divided into time slots to allocate them to individual terminal modems. In that system, however, the width of the allocated time slot decreases as the number of terminal modems increases. As a result, the rate of data transmission decreases, and the resulting delay in data reception may create a problem.

To solve this problem, the present embodiment divides the frequency for the purpose of allocation in addition to the division of time into the time slots. In other words, this embodiment concurrently employs the time division multiplex system and the frequency division multiplex system.

In this embodiment, a terminal modem is provided with a frequency-adjusting circuit. The frequency-adjusting circuit changes the input-output impedance of the terminal modem according to the passing frequency. This change is performed by receiving a control signal from the master station.

Figure 3 is a diagram showing the function of the frequency-adjusting circuit. The terminal modem is accompanied by a plurality of on-off switches, 17a to 17c, to act as an impedance-adjusting circuit and a plurality of band pass filters, BPFa to BPFc, to act as a frequency-adjusting circuit.

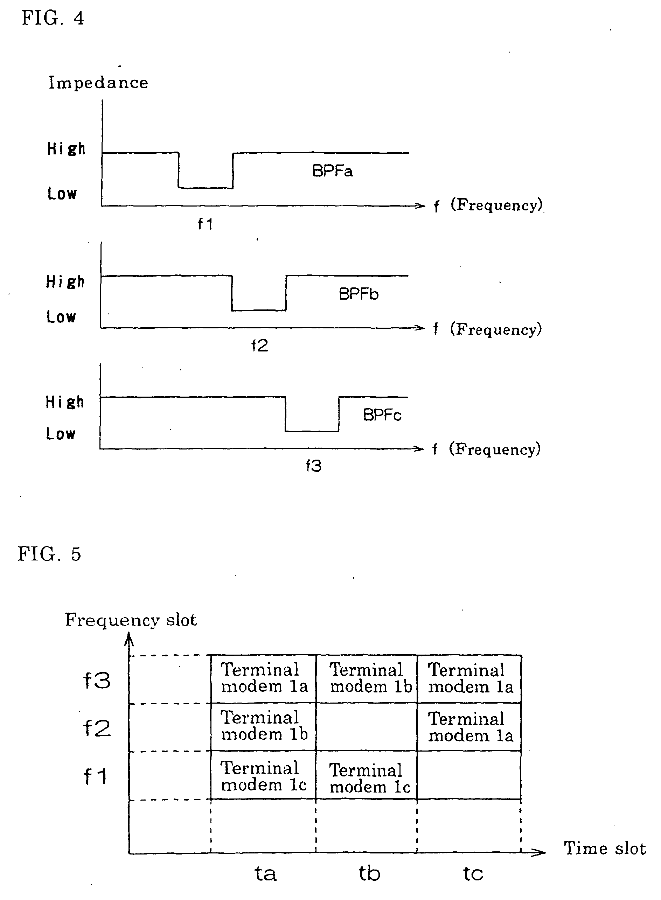

Figure 4 is a diagram showing the frequency-passing performance of the band pass filters BPFa to BPFc. Mutually different passing frequencies *f1, f2*, and *f3* are allocated to the band pass filters BPFa, BPFb, and BPFc, respectively. The band pass filters BPFa to BPFc themselves act as a matched low-impedance terminal for the allocated passing frequency. Therefore, when band pass filters are switched, values of the impedance are automatically switched. This is the reason why Fig. 4 has the vertical axis represented by "impedance."

When a terminal modem requires the master station to allocate a communication slot, the master station allocates a specific frequency and a specific time slot to the terminal modem.

Figure 5 is an illustration demonstrating the switch control for the terminal modems. For example, the terminal modem 1a uses the frequency *f3* at the time slot *ta*, does not communicate at the time slot *tb*, and uses the frequencies *f2* and *f3* at the time slot *tc*. The terminal modem 1b uses the frequency *f2* at the time slot ta, uses the frequency *f3* at the time slot *tb*, and does not communicate at the time slot *tc*.

Because each terminal modem adjusts its impedance to the low impedance only for the allocated frequency and time slot, other terminal modems can communicate with the master station without interference. More specifically, when a first terminal modem communicates with the master station using a first frequency, and a second terminal modem communicates with the master station using a second frequency in the same time slot, the impedance of the second terminal modem is high for the first frequency, and vice versa. Therefore, no interference occurs.

Unlike the embodiment explained by referring to Fig. 2, which divides only the time, the embodiment explained by referring to Figs. 3 to 5 divides both the time and frequency. This time and frequency division increases the number of available channels in comparison with the embodiment shown by Fig. 2. Consequently, high-rate signal transmission can be accomplished, and the delaying time of data transmission can be adjusted. As a result, images can be sent in real time, and a voice-delaying problem in telephone can be solved.

The present invention is explained above by demonstrating some embodiments. However, the present invention is not limited to the above-described embodiments. For example, under certain conditions, a high-pass filter or low-pass filter may be used in place of the foregoing band pass filter providing that they can pass signals having a specified frequency.

Furthermore, various changes may be performed within the scope of the present invention.

### Industrial Applicability

As explained above, the present invention employs a structure that enables the input-output frequency to change with respect to time. Consequently, the input-output frequency can be adjusted to an allocated frequency in an allocated time slot. As a result, a modem for a power line carrier system can communicate with an optimum input-output impedance that consistently attains conditions for good communication quality without mutual interference with the other modems connected to the power line carrier system. Thus, the modem offered by the present invention enables the maintenance of the communication under the best condition.

## Claims

1. A modem for a power line carrier system, the modem being for use in a communications system that carries out communication through a power distribution line network;
the modem being provided with impedance-adjusting means;
the impedance-adjusting means being:
capable of changing the input-output impedance with respect to time; and
in a time slot allocated for the communication, capable of adjusting the input-output impedance to a value that can attain a condition under which the communication is performed in good quality.

2. A modem as defined by claim 1, wherein the impedance-adjusting means can in the other time slots not allocated to the modem adjust the input-output impedance to a value higher than the value that can attain a condition under which the communication is performed in good quality.

3. A modem for a power line carrier system, the modem being for use in a communications system that carries out communication through a power distribution line network;
the modem being provided with frequency-adjusting means;
the frequency-adjusting means being:
capable of changing the input-output frequency with respect to time; and
in a time slot allocated for the communication, capable of adjusting the input-output frequency to enable an allocated frequency to pass through the means.

4. A modem as defined by claim 3, wherein the frequency-adjusting means:
has a plurality of filters; and
in an allocated time slot, can select a filter that passes an allocated frequency.

## Amended claims

### Amended claims under Art. 19.1 PCT

**1.** (Amended) A modem for a power line carrier system, the modem being for use in a communications system that carries out communication through a power distribution line network;
the modem being provided with impedance-adjusting means;
the impedance-adjusting means being:
capable of changing impedance high and low with respect to time, the impedance being commonly used for input- and output-signals related to communications; and
in a time slot allocated for the communication, capable of adjusting the input-output impedance to a value that can attain a condition under which the communication is performed in good quality.

**2.** A modem as defined by claim 1, wherein the impedance-adjusting means can in the other time slots not allocated to the modem adjust input-output impedance to a value higher than the value that can attain a condition under which the communication is performed in good quality.

**3.** (Amended) A modem for a power line carrier system, the modem being for use in a communications system that carries out communication through a power distribution line network;
the modem being provided with frequency-adjusting means;
the frequency-adjusting means being:
capable of changing input-output frequency with respect to time; and
in a time slot allocated for the communication, capable of adjusting the input-output frequency to enable only an allocated frequency to pass through
the means.

**4.** A modem as defined by claim 3, wherein the frequency-adjusting means:
has a plurality of filters; and
in an allocated time slot, can select a filter that passes an allocated frequency.

Statement under Art. 19.1 PCT
This amendment should clarify that in Claim 1, the impedance is commonly used for input- and output-signals related to communications, and that the impedance-adjusting means is capable of changing impedance to high and low with respect to time. Furthermore, Claim 3 must clarify that the impedance-adjusting means is only an allocated frequency and that the input-output frequency is capable of adjusting. Therefore, this invention is clearly different from the reference's invention.
